# EUROPÄISCHE PATENTSCHRIFT

(11) **EP 1 088 019 B1**
(45) Veröffentlichungstag und Bekanntmachung des Hinweises auf die Patenterteilung: **01.09.2004**
(21) Anmeldenummer: 99922091.6
(22) Anmeldetag: 08.04.1999
(51) Int. Cl.: C08G 64/40, B01D 3/06, B01D 1/30, C08F 6/00

(54) **VERFAHREN ZUR ENTFERNUNG FLÜCHTIGER KOMPONENTEN AUS POLYMERLÖSUNGEN**
METHODS FOR REMOVING VOLATILE COMPONENTS FROM POLYMER SOLUTIONS
PROCEDES POUR L'ELIMINATION DE CONSTITUANTS VOLATILS DANS DES SOLUTIONS POLYMERES

(30) Priorität: 21.04.1998 DE 19817677
(43) Veröffentlichungstag der Anmeldung: 04.04.2001
(73) Patentinhaber: Bayer MaterialScience AG, 51368 Leverkusen (DE)
(72) Erfinder: ELSNER, Thomas, D-40593 Düsseldorf (DE); HEUSER, Jürgen, D-47803 Krefeld (DE); KORDS, Christian, D-47829 Krefeld (DE)
(86) Internationale Anmeldenummer: PCT/EP1999/002387
(87) Internationale Veröffentlichungsnummer: WO 1999/054381

(56) Entgegenhaltungen:
- EP-A- 0 200 368
- EP-A- 0 359 432
- US-A- 2 941 985
- US-A- 3 453 184
- US-A- 3 884 766
- US-A- 4 808 262
- US-A- 4 830 097
- US-A- 5 416 186

## Beschreibung

Die vorliegende Erfindung betrifft Verfahren zur Entfernung flüchtiger Komponenten aus Polymerlösungen, die ohne thermische Schädigung des Polymeren zu Produkten mit niedrigem Restgehalt an flüchtigen Komponenten führen.

Das Entfernen von flüchtigen Komponenten aus einer Polymerlösung ist einer der letzten Verfahrensschritte bei der Herstellung vieler Polymere. Die zu entfernenden flüchtigen Bestandteile können entweder Lösungsmittel und/oder nicht polymerisierte Monomere sein. Abhängig von der Größenordnung der Viskosität der Polymerlösung sind verschiedene Verfahren zur Entfernung der flüchtigen Komponenten aus der Polymerlösung bekannt, bei denen jeweils die Polymerlösung über die Verdampfungstemperatur der flüchtigen Bestandteile erhitzt wird. Als Apparate sind z.B. Dünnschichtverdampfer, Extruder und solche mit indirektem Wärmeaustausch bekannt. Entscheidend ist bei der Erwärmung der Polymerlösung, dass das Polymere nicht geschädigt wird.

US-A 4,153,501 beschreibt eine Methode und eine Vorrichtung zur Entfernung flüchtiger Bestandteile aus einer Polymerschmelze durch Erhitzen in einem Wärmetauscher, der senkrecht angeordnete Kanäle enthält, die direkt in den Sumpf eines Abscheiders entspannen, wo die Verdampfung der flüchtigen Komponenten erfolgt. Die Kanäle weisen Höhen von 0,5 - 4 mm auf. Die Temperaturdifferenz zwischen Polymerlösung und Aufheizmedium soll weniger als 50°C betragen, die Abkühlung der Polymerlösung durch verdampfende Komponenten weniger als 30°C betragen. Es soll ein Restgehalt an flüchtigen Komponenten im Polymer von <0,1 Gew.-% erreicht werden.

In der EP-A 150 225 wird ein Apparat beschrieben, der über zwei in Reihe geschaltete Wärmetauscherpakete verfügt. Die Wärmetauscherpakete weisen rechteckige Kanäle auf. Dieser Apparat wird hauptsächlich für das zweistufige Aufheizen oder Kühlen während der Reaktion eingesetzt, ist aber apparativ relativ aufwendig.

Die EP-B 226 204 offenbart ein Verfahren und einen Wärmetauscher zur Entfernung flüchtiger Bestandteile aus einer Polymerlösung mit wenigstens 25 Gew.-% Polymer. Die Polymerlösung wird in einer Zone indirekten Wärmeaustausches erhitzt, die aus einer Vielzahl von Kanälen besteht. Die Kanäle weisen ein im Wesentlichen gleichmäßiges Verhältnis von Oberfläche zu Volumen von 0,158 - 1,97 mm⁻¹, eine Höhe von 1,27 - 12,7 mm, eine Breite von 2,54 - 10,16 cm und eine Länge von 1,27 - 30,48 cm auf. Die Polymerlösung wird in den Kanälen bei einem Druck von 2 bis 200 bar auf eine Temperatur oberhalb der Verdampfungstemperatur der flüchtigen Komponenten, aber unterhalb der Siedetemperatur des Polymeren erhitzt. Die Verweilzeit der Polymerlösung in den Kanälen beträgt 5 - 120 Sekunden. Nach dem Erhitzen wird die Lösung in eine Kammer überführt, in der mindestens 25 % der flüchtigen Bestandteile aus der Lösung ausgasen. Der Prozess verringert die thermische Schädigung dadurch, dass die Zeit, in der das Polymere hohen Temperaturen ausgesetzt wird, möglichst kurz gehalten wird. Das Verfahren hat jedoch den Nachteil, dass das Lösungsmittels nicht vollständig entfernt wird. Ferner entstehen an der Außenseite des Wärmetauscherpakets Polymerablagerungen, die mit der Zeit verkohlen und gelegentlich abplatzen, so dass das Produkt verunreinigt wird.

Die EP-B 352 727 offenbart einen Prozess zur Entfernung flüchtiger Bestandteile aus Polymerlösung, bei dem die Polymerlösung in einer Vielzahl parallel geschalteter Kanäle über die Verdampfungstemperatur der flüchtigen Komponenten erhitzt wird. Das Verhältnis von Wärmeaustauschfläche zu Produktvolumenstrom ist > 80 h/m. Die Strömungsgeschwindigkeit in den Kanälen ist < 0,5 mm/s und die Verweilzeit der Polymerlösung in den Kanälen beträgt 120 - 200 Sekunden. Auch dieses Verfahren hat den Nachteil, dass das Lösungsmittels nicht vollständig entfernt wird. Ferner entstehen auch hier an der Außenseite des Wärmetauscherpakets Polymerablagerungen, die mit der Zeit verkohlen und gelegentlich abplatzen, so dass das Produkt verunreinigt wird.

In US 3 884 766 wird ein zweistufiges Verfahren zur Herstellung von Polymeren beschrieben, wobei die zweite Stufe auch zur Entfernung leichtflüchtiger Bestandteile und Monomerreste dient. US 3 884 766 geht jedoch mit keinem Wort auf den Aspekt des Reaktormaterials und dessen Einfluss auf die Produktqualität ein.

In US 5 416 186 wird ein zweistufiges Verfahren zur Herstellung von an flüchtigen Bestandteilen armem Polycarbonat beschrieben, wobei die zweite Stufe in Reaktoren aus eisenarmem Material durchgeführt wird. Die erste Stufe wird diesbezüglich in US 5 416 186 jedoch als unkritisch eingestuft und es wird weder als wesentlich erkannt noch vermutet, dass auch in der ersten Stufe die Materialauswahl ein entscheidender Faktor für die Produktqualität sein könnte.

Aufgabe der Erfindung war es, ein Verfahren zur Entfernung flüchtiger Komponenten aus Polymerlösungen bereitzustellen, das ohne thermische Schädigung des Polymeren zu farbhellen Produkten mit niedrigem Restgehalt an flüchtigen Komponenten führt.

Die Aufgabe wurde erfindungsgemäß gelöst durch ein zweistufiges Verfahren zur Entfernung flüchtiger Komponenten aus Polymerlösungen mit einem Polymergehalt >60 Gew.-%, bei dem in einer ersten Stufe die Polymerlösung in einem Kanäle aufweisenden indirekten Wärmeaustauscher bei einem Druck von 1,5 bis 50 bar auf 150 bis 400°C erhitzt und anschließend in den Kanälen auf einen Druck von 3 bis 200 mbar entspannt wird, wodurch die Strömung in den Kanälen zumindest zum Teil zweiphasig wird, und die flüchtigen Komponenten zumindest teilweise von dem Polymeren abgetrennt werden, und das noch Reste flüchtiger Komponenten enthaltende Polymer in einer zweiten Stufe bei einem Druck von 0,1 bis 10 mbar und einer Temperatur von 200 bis 450°C von den restlichen flüchtigen Komponenten befreit wird, wobei alle mit der Polymerlösung, dem Polymer oder den flüchtigen Komponenten in Berührung kommenden Oberflächen der Vorrichtung, mittels der das Verfahren durchgeführt wird, aus einem Werkstoff bestehen, der weniger als 10 Gew.-% Eisen enthält. Dabei ist es natürlich möglich, alle produktberührten Teile der Vorrichtung aus dem eisenarmen Werkstoff zu fertigen. Bevorzugt weisen die Vorrichtungen jedoch nur eine eisenarme Oberfläche, z.B. eine Plattierung aus eisenarmem Werkstoff, auf und sind darunter aus konventionellem Stahl oder Eisen gefertigt.

Die Polymerlösung wird in der ersten Stufe des erfindungsgemäßen Verfahrens mit einem Druck von 1,5 bis 50 bar abs., bevorzugt 2 bis 5 bar abs., in die Kanäle des Wärmetauschers gepresst, durchfließt die Kanäle und wird dabei auf eine Temperatur von 150 bis 400°C, bevorzugt 200 bis 350°C erhitzt. Am Auslass der Kanäle herrscht ein Druck, der unterhalb des Sättigungsdrucks der flüchtigen Komponenten liegt. Dieser beträgt 30 bis 200 mbar abs., bevorzugt 30 bis 100 mbar abs.

Die Verweilzeit der Polymerlösung beträgt bevorzugt 2 bis 120 Sekunden, besonders bevorzugt 80 bis 120 Sekunden, bei einer Fließgeschwindigkeit von bevorzugt 0,0001 bis 0,1 mm/s, besonders bevorzugt 0,001 bis 0.005 mm/s. Das Verhältnis von Wärmeaustauschoberfläche der Kanäle zum Volumenstrom der Polymerlösung beträgt bevorzugt 5 bis 75 h/m, besonders bevorzugt 15 bis 50 h/m.

Bevorzugt wird als indirekter Wärmeaustauscher ein Wabenverdampfer eingesetzt, dessen Kanäle ein parabolisches Profil aufweisen. Dadurch wird der Produktstrom in den Kanälen entspannt, was zur Folge hat, dass der Produktstrom beim Durchströmen der Kanäle in zumindest einem Teil des Kanals zweiphasig wird und eine Abtrennung der flüchtigen Komponenten über den Gasstrom erfolgen kann. Bevorzugt werden die flüchtigen Komponenten in der ersten Stufe bis auf einen Restgehalt <0,5 Gew.-% entfernt und das Produkt wird dann in die zweite Stufe überführt.

In der zweiten Stufe wird das Polymere bei einem Druck von 0, bis 10 mbar abs., bevorzugt 0,5 bis 3 mbar abs., und einer Temperatur von 200 bis 450°C, bevorzugt 250 bis 350°C, von den restlichen flüchtigen Komponenten befreit. Die Restentgasung wird dadurch unterstützt, dass das Polymere in der Vorrichtung so verteilt wird, dass eine große Stoffaustauschoberfläche entsteht und damit die Diffusion der flüchtigen Komponenten aus dem Polymer erleichtert wird. Bevorzugt wird diese zweite Stufe in einem Strangverdampfer durchgeführt. Im Strangverdampfer wird das Polymere durch eine Lochplatte mit einer Vielzahl von Bohrungen gepresst oder über einen Rohrverteiler, der die erforderlichen Löcher enthält, verteilt. Dadurch wird eine Vielzahl von Polymersträngen erzeugt, die langsam bis zum Boden des Apparates fließen und dabei die noch vorhandenen flüchtigen Anteile abgeben.

Beispiele für eisenarme Werkstoffe im Sinne der Erfindung sind Alloy 59 (2.4605), Inconell 686 (2.4606), Alloy B-2, Alloy B-3, Alloy B-4, Hastelloy C-22, Hastelloy C-276, Hastelloy C-4 oder Tantal. Vorzugsweise wird Alloy 59 eingesetzt.

Das erfindungsgemäße Verfahren kann zur Entfernung von flüchtigen Komponenten aus Lösungen von thermoplastischen Polymeren, Elastomeren, Siliconpolymeren, Schmierstoffen mit hohem Molekulargewicht und ähnlichen Substanzen eingesetzt werden, vorzugsweise wird es jedoch bei Lösungen von thermoplastischen Polymeren angewandt, beispielsweise Polystyrol, Polyphenylen, Polyurethan, Polyamid, Polyester, Polyacrylat, Polymethacrylat und deren Copolymeren. Besonders geeignet ist das erfindungsgemäße Verfahren zur Entfernung flüchtiger Komponenten aus Polycarbonatlösungen.

### Beispiele

### Beispiel 1

Eine 75 Gew.-% Polycarbonat, 24 Gew.-% Chlorbenzol und 1 Gew.-% Methylenchlorid enthaltende Lösung wird mit einem Druck von 3 bar abs. in die Kanäle eines Wärmetauschers gepresst und dort auf 300°C erhitzt. Der Wärmetauscher weist 100 Kanäle mit einer Länge von 330 mm auf, die am Eintritt einen Durchmesser von 16 mm aufweisen, sich zunächst bis zur Länge von 200 mm linear auf 34 mm Durchmesser und anschließend parabelförmig bis auf 104 mm am Ausgang erweitern. Hinter den Kanälen liegt ein Druck von 40 mbar abs. an. Die Verweilzeit der Polycarbonatlösung in den Kanälen beträgt 100 Sekunden.. Das Polycarbonat wird am Fuß des Wärmetauschers gesammelt, der Chlorbenzolgehalt beträgt 1500 ppm. Die Polycarbonatlösung wird dann in einen Strangverdampfer gepumpt, auf dessen Lochboden verteilt und mit einem Druck von 40 bar abs. durch 1000 Bohrungen von 1 mm Durchmesser gepresst, so dass sich eine Vielzahl von 6m langen Strängen ausbildet. Bei einem Druck von 1 mbar abs. und einer Temperatur von 300°C wird die Restkonzentration an Lösemittel im Polycarbonat auf 20 ppm Chlorbenzol reduziert. Alle produktberührten Teile der Anlage sind aus Alloy 59 gefertigt Das entgaste Polycarbonat weist einen Yellowness-Index (YI, gemessen nach ASTM D 1925) von 2,3 auf.

### Beispiel 2

Der Versuch wird analog Beispiel 1 durchgeführt, jedoch sind die produktberührten Teile der Anlage aus eisenreichem Stahl (1.4571) gefertigt. Es wird derselbe Restgehalt an Lösungsmittel erreicht wie in Beispiel 1, jedoch weist das erhaltene Polycarbonat einen YI >10 auf.

## Patentansprüche

1. Zweistufiges Verfahren zur Entfernung flüchtiger Komponenten aus Polymerlösungen mit einem Polymergehalt > 60 Gew.-%, bei dem in einer ersten Stufe die Polymerlösung in einem Kanäle aufweisenden indirekten Wärmeaustauscher bei einem Druck von 1,5 bis 50 bar auf 150 bis 400°C erhitzt und anschließend in den Kanälen auf einen Druck von 3 bis 200 mbar entspannt wird, wodurch die Strömung in den Kanälen zumindest zum Teil zweiphasig wird, und die flüchtigen Komponenten zumindest teilweise von dem Polymeren abgetrennt werden, und das noch Reste flüchtiger Komponenten enthaltende Polymer in einer zweiten Stufe bei einem Druck von 0, bis 10 mbar und einer Temperatur von 200 bis 450°C von den restlichen flüchtigen Komponenten befreit wird bei dem alle mit der Polymerlösung, dem Polymer oder den flüchtigen Komponente in Berührung kommenden Oberflächen der Vorrichtung, mittels der das Verfahren durchgeführt wird, aus einem Werkstoff bestehen, der weniger als 10 Gew.-% Eisen enthält.

2. Verfahren gemäss Anspruch 1, bei dem der indirekte Wärmeaustauscher ein Wabenverdampfer ist und die Kanäle des Wabenverdampfers parabolisches Profil aufweisen.

3. Verfahren gemäss Anspruch 1 oder 2, bei dem der Restgehalt an flüchtigen Komponenten nach der ersten Stufe < 0,5 Gew.-% beträgt.

4. Verfahren gemäss Anspruch 1 bis 3, bei dem die zweite Stufe in einem Strangverdampfer durchgeführt wird.

## Claims

1. A two-stage process for removing volatile components from polymer solutions with a polymer content > 60 wt.%, in which in a first stage the polymer solution is heated to 150 to 400°C at a pressure of 1.5 to 50 bar in an indirect heat exchanger containing channels and then depressurised to a pressure of 3 to 200 mbar in the channels, wherein the flow in the channels becomes at least partly two-phase, and at least some of the volatile components are separated from the polymers and the residual volatile components are removed from the polymer which still contains the remainder of the volatile components at a pressure of 0.1 to 10 mbar and a temperature of 200 to 450°C in a second step in which all the surfaces of the device with which the process is performed which come into contact with the polymer solution, the polymer or the volatile components consist of a material which contains less than 10 wt.% of iron.

2. A process according to Claim 1, in which the indirect heat exchanger is a honeycomb evaporator and the channels in the honeycomb evaporator have a parabolic profile.

3. A process according to Claim 1 or 2, in which the residual concentration of volatile components is < 0.5 wt.% after the first stage.

4. A process according to Claims 1 to 3, in which the second stage is performed in a long-tube evaporator.

## Revendications

1. Procédé en deux étapes pour l'élimination de constituants volatils dans des solutions de polymère présentant une teneur en polymère > 60% en poids, dans lequel, dans une première étape, la solution de polymère est chauffée dans un échangeur de chaleur indirect comportant des canaux sous une pression de 1,5 à 50 bar(s) de 150 à 400°C, et ensuite détendue dans les canaux à une pression de 3 à 200 mbars, ce qui a pour conséquence que l'écoulement dans les canaux comporte au moins en partie deux phases et que les constituants volatils sont au moins partiellement séparés du polymère, et le polymère contenant encore des restes de constituants volatils est débarrassé, dans une deuxième étape, sous une pression de 0,1 à 10 mbar(s) et à une température de 200 à 450°C, des constituants volatils restants, dans lequel toutes les surfaces du dispositif au moyen duquel le procédé est mis en oeuvre venant en contact avec la solution de polymère, le polymère ou les constituants volatils, sont constituées d'un matériau qui contient moins de 10% en poids de fer.

2. Procédé selon la revendication 1, dans lequel l'échangeur de chaleur indirect est un échangeur à nid d'abeilles et les canaux de cet échangeur à nid d'abeilles présentent un profil parabolique.

3. Procédé selon la revendication 1 ou 2, dans lequel la teneur résiduaire en constituants volatils après la première étape est < 0,5% en poids.

4. Procédé selon les revendications 1 à 3 dans lequel la deuxième étape est mise en oeuvre dans un évaporateur à filets multiples.
